# EUROPEAN PATENT APPLICATION

(11) **EP 4 578 615 A1**
(43) Date of publication of application: **02.07.2025**
(21) Application number: 23857038.6
(22) Date of filing: 19.07.2023
(51) Int. Cl.: B28B 1/30

(54) **GYPSUM BOARD MANUFACTURING METHOD**

(30) Priority: 23.08.2022 JP 2022132659
(71) Applicant: Yoshino Gypsum Co., Ltd., Tokyo 100-0005 (JP)
(72) Inventor: NIIMI Katsumi, Tokyo 100-0005 (JP); SATO Yosuke, Tokyo 100-0005 (JP); NAITO Daisuke, Tokyo 100-0005 (JP)
(74) Representative: Wächtershäuser & Hartz Patentanwaltspartnerschaft mbB
(86) International application number: PCT/JP2023/026334
(87) International publication number: WO 2024/042922

(57) **Abstract**

There is developed and provided a technique that: can effectively suppress, by a simple method without using a chemical substance, the occurrence of wrinkling on lining paper for forming a gypsum board product to be obtained by a method for producing a gypsum board and is applicable to actual continuous production processes for a gypsum board; and can stably produce a superior-quality gypsum board with high yield. This method for producing a gypsum board has a step of conveying a board-like laminate in which a gypsum material layer is laminated between tope paper and bottom paper of lining paper for gypsum board while forming the board-like laminate, wherein: the step has a series of processes of disposing the bottom paper on an operating conveying-and-forming belt, continuously pouring a gypsum slurry of a raw material for a gypsum material layer onto the bottom paper being conveyed, laminating the top paper on the gypsum slurry with a forming machine to mold the board-like laminate, and conveying the board-like laminate to a rough cutting machine with the conveying-and-forming belt; and water is sprayed or applied onto the top paper at a position: which is between the forming machine disposing position and the rough cutting machine disposing position; and whose distance from the forming machine disposing position is 1/4 of the distance therebetween, or at a position which is on the forming machine side that is the upstream side of the position whose distance from the forming machine is 1/4 of the distance between the forming machine disposing position and the rough cutting machine disposing position.

## Description

### Technical Field

The present invention relates to a gypsum board production method wherein a gypsum board is continuously produced and a technique that makes it possible to provide a gypsum board product in which the "occurrence of wrinkling" on lining paper forming the produced gypsum board is suppressed by a simple method. In more detail, the present invention relates to a method for producing a gypsum board, the method making it possible to suppress the "occurrence of wrinkling" and improve product yield under the circumstances described below: when the gypsum board is produced at a high speed increasing the speed of the conveying belt more than in the conventional methods for the purpose of enhancing productivity of the gypsum board in continuously producing a gypsum board product on a conveying-and-forming belt also called a conveying belt, or when lightweight paper is used of lining paper for gypsum board, there has been a tendency that the "occurrence of wrinkling" is likely to happen in lining paper of the produced gypsum board.

### Background Art

Gypsum boards are interior materials and exterior substrate materials obtained by covering both surfaces of gypsum as a core material with lining paper for gypsum board and forming the covered gypsum into a board shape and have especially excellent properties as building materials. Therefore, gypsum boards have been spread rapidly after the Second World War and are currently used in a wide range. Gypsum boards are mass-produced by being produced in the manner described below. First, a gypsum slurry obtained by kneading calcined gypsum and water is poured between bottom paper (cover paper for gypsum board) and top paper (backing paper for gypsum board) which are continuously fed and which are called lining paper for gypsum board. The gypsum board, the bottom paper, and the top paper are molded into a board shape and conveyed with a conveying belt, while the gypsum is set. Thereafter the board-shaped body is roughly cut and fed for a drying step to dry surplus moisture. After the drying, the resultant gypsum boards are cut into a product size, and thus the gypsum boards are continuously produced. More specifically, gypsum boards are continuously produced through a series of steps as follows: a gypsum slurry is continuously poured on bottom paper of lining paper for gypsum board before being continuously fed into a forming machine, and the bottom paper is conveyed while the slurry is stacked; further, top paper of lining paper for gypsum board is laminated on (coats) the stacked body with a forming machine to pass the resultant body through a roller, an extruder, or the like, and thus a continuous board-like laminate is formed on the conveying belt; subsequently, this continuous board-like laminate is roughly cut into a predetermined size, and surplus moisture is dried by forcible drying; and thereafter, the roughly cut board-like laminates are cut for finishing into a predetermined product size.

In the above-described production steps, the formed, continuous board-like laminate on the conveying belt is not dried and retains excess moisture derived from the gypsum slurry. Therefore, the lining paper for gypsum board that forms the board-like laminate is disposed on the conveying-and-forming belt in a wet state due to this moisture and is conveyed. When, for example, nonuniform stress is applied to the lining paper for gypsum board being fed in this state, a crepe-like or streak-like wrinkle sometimes occurs on the surface of the lining paper for gypsum board. In this case, the "occurrence of wrinkling" in the lining paper for gypsum board may lead to a defective depending on the extent of wrinkling, and therefore this "occurrence of wrinkling" is an important issue that affects product yield.

In order to deal with such "occurrence of wrinkling" in lining paper for gypsum board, which is a defective phenomenon of wrinkling, Patent Literature 1 proposes as follows. Specifically, Patent Literature 1 discloses a method for simultaneously preventing the occurrence of wrinkling and peel of paper, wherein in producing a gypsum board, a lubricant is applied on the outer surface of the lining paper for gypsum board on a conveying-and-forming belt for gypsum board or applied on the surface of the conveying-and-forming belt in contact with the outer surface of the lining paper for gypsum board to impart hydrophobicity and lubricity on the outer surface of the lining paper for gypsum board.

### Citation List

### Patent Literature

Patent Literature 1: Japanese Patent Laid-Open No. 2006-82487

### Summary of Invention

### Technical Problem

However, in the conventional technique described above, there is problems as follows: a lubricant (hereinafter, referred to as "chemical agent"), which is a chemical substance, needs to be applied at the interface between the bottom paper of the lining paper for gypsum board and the conveying belt, which makes the production steps complicated; in addition, a chemical agent having hydrophobicity and lubricity is used, which increases the cost for the chemical agent; and furthermore, the chemical agent is left on the bottom paper.

Moreover, in recent years, lining paper for gypsum board to be used has been newly developed, which leads to progress of reduction in weight of lining paper, but there is a problem of the "occurrence of wrinkling" as described below, and the actual circumstances are such that putting newly developed lining paper for gypsum board into practical use has not progressed. Furthermore, higher productivity has been required, but according to studies conducted by the present inventors, there is a tendency that the above-described "occurrence of wrinkling" increases in gypsum board products, and therefore the present inventors have recognized that development of a technique for suppressing the "occurrence of wrinkling" is urgent.

Gypsum boards are interior building materials and exterior substrate materials which are used in large volumes and also functional materials for fire resistance, sound insulation, humidity control, and the like, and therefore improvements in product quality and higher productivity through improvements in constituent materials have been required for gypsum boards. For example, with regard to lining paper for gypsum board, which is essential for gypsum board products, a technique of reducing weight has progressed as described below. Conventional lining paper for gypsum board is usually a paperboard having a basis weight of about 270 to about 360 g/m². Here, the quality of paper that is excellent in strength, smoothness, and water resistance is required for lining paper to be used on the front surface side of gypsum boards which are interior building materials and exterior substrate materials. On the other hand, it is considered that lining paper to be used on the back surface side of gypsum boards preferably has quality of paper that is porous, in other words, rich in water absorbency, so that the lining paper can adhere well to a gypsum layer which is formed of a poured gypsum slurry. In addition to that, breathability to a certain extent is required for lining paper to be used on the reverse surface side of gypsum boards so as to allow excess moisture to escape during setting a gypsum layer. In order to meet the requirements, it has been made possible to produce lining paper having a basis weight in a range of about 80 to 200 g/m² (hereinafter, sometimes referred to as "lightweight paper") while having the same strength and breathability as those in conventional paperboards having a basis weight of about 270 to about 360 g/m² due to, for example, recent development of a technique of producing lining paper for gypsum board.

However, according to studies conducted by the present inventors, particularly when the lightweight paper described above is used as lining paper for gypsum board, it has been found that the tendency that the wrinkling defect described above is likely to occur is increasingly greater. For this reason, there is a problem that it is extremely difficult to apply lightweight paper to the actual continuous gypsum board production processes, which aim to stably produce, with high yield, superior-quality gypsum board products in which the "occurrence of wrinkling" is suppressed.

Furthermore, the following problem is another factor of the "occurrence of wrinkling." Recently, in order to increase the productivity of gypsum boards, efforts have been made to increase the speed of production. However, during the continuous production of a gypsum board in a series of steps described above, as the speed of production increases, phenomena such as an increase in the mechanical vibration of the conveying-and-forming belt and an increase in the friction between the lining paper for gypsum board and the belt surface on the conveying-and-forming belt occur. Therefore, when the production speed is increased, there is a growing tendency that fine crepe-like or streak-like wrinkles appear on the surface of the lining paper for gypsum board that comes into contact with the conveying-and-forming belt, which is thought to be caused by the above-described phenomena. The present inventors have recognized that, since the "occurrence of wrinkling" is increasing even with the increased production speed, there is an urgent need to develop a technique that enables stable, efficient, and high-yield production of a superior-quality gypsum board product with controlled wrinkle occurrence even when productivity is increased.

Accordingly, an object of the present invention is to develop and provide, in a gypsum board production method wherein a gypsum board is continuously produced, a technique that: can effectively suppress, by a simple method without using a chemical substance (chemical agent), the occurrence of wrinkling on lining paper forming the produced gypsum board and is applicable to actual continuous production processes for an gypsum board; and can stably produce a superior-quality gypsum board with high yield by enhancing production efficiency.

### Solution to Problem

The object is achieved by the following method for producing a gypsum board of the present invention.
[1] A method for continuously producing a gypsum board, including a forming-and-conveying step of forming a board-like laminate in which a gypsum slurry being a raw material for a gypsum material layer of a gypsum board is laminated between top paper of lining paper for gypsum board and bottom paper of lining paper for gypsum board and conveying the board-like laminate while forming the board-like laminate, wherein
   the forming-and-conveying step has a series of processes of continuously pouring the gypsum slurry onto the bottom paper of lining paper for gypsum board before being continuously fed into a forming machine, laminating the top paper of lining paper for gypsum board on the poured gypsum slurry with the forming machine to mold the board-like laminate, and conveying the molded board-like laminate to a rough cutting machine with a conveying-and-forming belt, and
   water is sprayed or applied onto the top paper of lining paper for gypsum board at a position: which is between the forming machine disposing position and the rough cutting machine disposing position; which is on the upstream side (forming machine side) in therebetween; and whose distance from the forming machine disposing position is 1/4 of the distance therebetween, or at a position which is on the forming machine side that is the upstream side of the position whose distance from the forming machine is 1/4 of the distance between the forming machine disposing position and the rough cutting machine disposing position.
   Preferred embodiments of the method for producing a gypsum board of the present invention include the following.
[2] The method for producing a gypsum board according to [1], wherein each of the top paper of lining paper for gypsum board and the bottom paper of lining paper for gypsum board has a basis weight within a range of 80 to 200 g/m².
[3] The method for producing a gypsum board according to [1] or [2], wherein the top paper of lining paper for gypsum board has a basis weight smaller than the bottom paper of lining paper for gypsum board by 5 g/m² to 60 g/m².
[4] The method for producing a gypsum board according to any one of [1] to [3], wherein the amount of water to be sprayed or to be applied is within a range of 2.0 to 200 g/m².
[5] The method for producing a gypsum board according to any one of [1] to [4], wherein the conveying speed of the conveying-and-forming belt is 60 m/minute or higher.

### Advantageous Effects of Invention

According to the present invention, a remarkable effect is obtained such that the "occurrence of wrinkling" on the lining paper for gypsum board of a produced gypsum board product in a method for producing a gypsum board, wherein the gypsum board is continuously produced, can be effectively suppressed by a simple method without using a chemical substance (chemical agent). Further, the present invention is a technique that is applicable to processes for continuously producing a gypsum board with actual machines which are actually used for producing a gypsum board, and therefore according to the present invention, there is provided a highly practical method for producing a gypsum board, the method making it possible to stably produce a superior-quality gypsum board product with high yield. Moreover, according to the present invention, even when the speed of the conveying-and-forming belt is increased, which can be a factor to cause the "occurrence of wrinkling" in a process for continuously producing a gypsum board, the "occurrence of wrinkling" on lining paper which forms the gypsum board can be suppressed, and therefore the present invention makes it possible to improve the productivity and stably produce a superior-quality gypsum board more efficiently with high yield. Furthermore, according to the present invention, in continuous production processes for a gypsum board, even when lightweight paper, which is considered to be extremely difficult to apply, is used as the lining paper for gypsum board, it becomes possible to stably produce a superior-quality gypsum board with high yield, so that the range of selection for lining paper for gypsum board is expanded, and it becomes possible to obtain various gypsum board products.

### Brief Description of Drawings

[Figure 1] Figure 1 is a schematic diagram for describing a production step in a method for producing a gypsum board of the present invention.
[Figure 2] Figure 2 is a schematic diagram for describing a part where a board-like laminate is molded in a forming-and conveying step in the method for producing a gypsum board in Figure 1.

### Description of Embodiments

Hereinafter, the present invention will be described giving preferred embodiments of the invention. In the process of conducting diligent studies on various methods for the purpose of further improving the production speed of a gypsum board and making recently improved lightweight paper of lining paper for gypsum board usable in the processes for continuously producing a gypsum board, the present inventors have clarified one of the causes of wrinkling that occurs on the surface of a gypsum board when lightweight paper is used. Hereinafter, description will be made in this regard. In a series of steps for producing a gypsum board, a board-like laminate which is disposed and conveyed on a conveying-and-forming belt is not dried and retains excess moisture derived from a gypsum slurry, as described above. A gypsum board is covered with lining paper for gypsum board, and the lining paper continues to swell due to the excess moisture during a forming-and-conveying step. Here, the gypsum board produced through the series of steps is usually formed in such a way that the bottom surface of bottom paper to be disposed on the conveying-and-forming belt is used as the front surface of the gypsum board. Under such circumstances, according to studies conducted by the present inventors, it has been found that when there is a difference in swelling between the bottom paper that forms the front surface of the gypsum board and the top paper to be the back surface, a crepe-like or streak-like wrinkle occurs on the surface of the lining paper for gypsum board on the conveying-and-forming belt.

Here, the cause of bringing about the difference in the swelling state between the top paper and bottom paper of lining paper for gypsum board in the forming-and-conveying step is given as follows. In the forming-and-conveying step, the gypsum slurry is poured onto the bottom paper before being continuously fed into a forming machine and is transferred to the forming machine while being vibrated with a vibrator as necessary for the purpose of defoaming in the gypsum slurry. During this, as a matter of course, only the bottom paper of lining paper for gypsum board is in contact with the gypsum slurry, and therefore only the bottom paper swells. On the other hand, the top paper comes into contact, immediately before the forming machine, with the gypsum slurry poured onto the bottom paper. The top paper begins to swell from the point in time when the top paper comes into contact with the gypsum slurry, and therefore there is a difference in time when the swelling starts between the top paper and bottom paper of lining paper for gypsum board. This difference in timing when the swelling starts between the bottom paper and the top paper is considered to be one of the causes of bringing about the difference in swelling between the bottom paper and the top paper in the lining paper for gypsum board.

In gypsum board production lines where the gypsum board products are continuously produced, a continuous board-like laminate is formed through a forming machine or the like on a forming belt for conveyance, and the board-like laminate is conveyed to a subsequent rough cutting machine, as described above. In the board-like laminate on the conveying-and-forming belt during the conveyance, the inside of the top paper of lining paper for gypsum board is in contact with the gypsum slurry, and the outside thereof is in contact with the air, so that the top paper is in a state where excessive moisture easily evaporates. On the other hand, the inside of the bottom paper of lining paper for gypsum board is in contact with the gypsum slurry, and the outside thereof is in contact with the forming belt, so that the bottom paper is in a state where excess moisture is more unlikely to evaporate than in the top paper. The present inventors have found that this difference in easiness of evaporation of excess moisture on the conveying-and-forming belt between the bottom paper and the top paper in particular, in addition to the above-described difference in swelling due to the difference in time when the swelling starts, is the main cause of bringing about the difference in the extent of the swelling state between the bottom paper and the top paper in the lining paper for gypsum board.

The present inventors have conducted diligent studies based on the above-described findings and, as a result, completed the present invention. Specifically, the present inventors have conducted diligent studies paying attention to the following: the above-described bottom paper in the lining paper for gypsum board is in a state where excess moisture is more unlikely to evaporate than in the top paper, which occurs in gypsum board production lines where the gypsum board products are continuously produced, in other words, the top paper is in a state where excess moisture more easily evaporates than in the bottom paper, and thus the present inventors have completed the configuration of the present invention and achieved the effects of the present invention. In view of the difference in the swelling state between the top paper and bottom paper of lining paper for gypsum board, the present inventors have predicted as follows: the difference in the swelling state between the top paper and bottom paper of lining paper for gypsum board can be improved by supplying water to the top paper that is in a state where excess moisture more easily evaporates and that forms the board-like laminate on the conveying-and-forming belt, so that the "occurrence of wrinkling" in the lining paper for gypsum board can be suppressed, and thus the present inventors have completed the present invention.

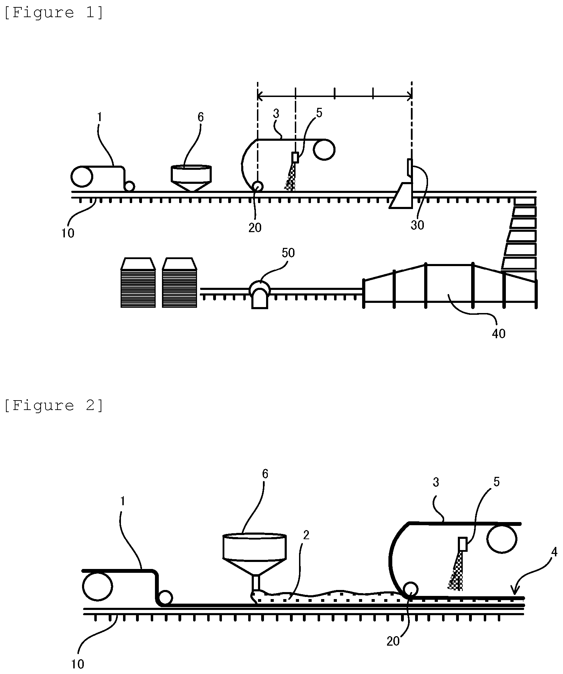

Based on the above-described findings, the present inventors have conducted studies to find that the "occurrence of wrinkling" on the lining paper for gypsum board can be effectively suppressed in a final gypsum board product by extremely simply means of spraying or applying water to the top paper of lining paper for gypsum board that forms the board-like laminate on the conveying-and-forming belt (that is, supplying moisture to the top paper). Furthermore, the present inventors have found that the position where the water is supplied to the top paper of lining paper for gypsum board that forms the board-like laminate on the conveying-and-forming belt is extremely important in suppressing the "occurrence of wrinkling", which is an object of the present invention. Specifically, the present inventors have found the following (see Figure 1): in a series of operation in a gypsum board production line where a gypsum board product is continuously produced, when water is, for example, sprayed onto the top paper of lining paper for gypsum board at a position: which is between the forming machine disposing position and the rough cutting machine disposing position; which is on the upstream side (forming machine side) in therebetween; and whose distance from the forming machine disposing position is 1/4 of the distance therebetween, or at a position which is on the forming machine side that is the upstream side of the position whose distance from the forming machine is 1/4 of the distance between the forming machine disposing position and the rough cutting machine disposing position, to supply moisture to the top paper, thereby effective results are obtained. Here, the forming machine is for laminating the top paper of lining paper for gypsum board on the gypsum slurry, and the rough cutting machine is for roughly cutting the board-like laminate formed.

What is important in the present invention is to reduce the above-described difference in the swelling state between the top paper and bottom paper of lining paper for gypsum board by supplying moisture to the top paper that forms the board-like laminate on the conveying-and-forming belt. It is also important to supply moisture to the top paper at a more effective position than the above-described position. Accordingly, the method of supplying moisture is not particularly limited as long as moisture can be supplied to the top paper of lining paper for gypsum board, but in the present invention, the method is specified as "water is sprayed or applied." Furthermore, in view of the above-described object and the easiness of drying after supplying moisture are taken into consideration, it is desirable to supply a small amount of moisture uniformly to the top paper by simple means, and therefore among others, it is preferable to spray water. Examples of the water include industrial water, tap water, well water, and purified water. Anyway, water is only sprayed, and a chemical agent is not used in the production method of the present invention, and therefore the production method of the present invention is extremely useful as a method for producing a gypsum board product which is an interior building material.

A gypsum board production line where a gypsum board product is continuously produced will be described with reference to Figure 1 and Figure 2. As described above, in the gypsum board production line, a board-like laminate 4 formed is disposed on a conveying-and-forming belt 10 in operation and conveyed, and with this conveyance, bottom paper 1 of lining paper for gypsum board and top paper 3 of lining paper for gypsum board are conveyed to a forming machine 20. A gypsum slurry 2 is continuously poured from a mixer 6 onto the bottom paper 1 of lining paper for gypsum board which is being continuously conveyed, and the top paper 3 of lining paper for gypsum boards 3 is laminated on the poured gypsum slurry 2 with the forming machine 20 to form the board-like laminate 4. Subsequently, the board-like laminate 4 formed is conveyed with the conveying-and-forming belt 10 to a rough cutting machine 30 and is roughly cut into a desired length with the rough cutting machine 30 and made into a board shape. Furthermore, the roughly cut boards are forcibly dried with a dryer 40 and then finish-cut into a desired product size with a finish-cutting machine 50, and thus a gypsum board product is continuously produced through such a series of steps.

The method for producing a gypsum board of the present invention is characterized in that in a series of steps described above, water is sprayed or applied (that is, moisture is supplied) with a water sprayer 5 onto the top paper 3 of lining paper for gypsum board laminated for the purpose of forming the board-like laminate 4 at a position: which is between the forming machine 20 disposing position and the rough cutting machine 30 disposing position; which is on the upstream side (forming machine side) in therebetween; and whose distance from the forming machine disposing position is 1/4 of the distance therebetween, or at a position on the side closer to the forming machine 20 than, i.e., a position on the upstream side of, the position whose distance from the forming machine is 1/4 of the distance between the forming machine disposing position and the rough cutting machine disposing position, as shown in Figure 1. Due to such a configuration, the problem of "occurrence of wrinkling" on the lining paper for gypsum board of a gypsum board product can be effectively suppressed.

In contrast, the present inventors have found that even if moisture is supplied (hereinafter, expressed as "water is sprayed") by, for example, spraying water at a position which is on the downstream side of the position on the upstream side (forming machine side) whose distance from the forming machine is 1/4 of the distance between the forming machine disposing position and the rough cutting machine disposing position, i.e. spraying water at a position away from the position of the forming machine 20 toward the rough cutting machine 30 side, the above-described remarkable effect cannot be obtained. Details on this point will be described later. Regarding the reason that the problem of the "occurrence of wrinkling" can be more effectively suppressed by spraying water to the top paper at the position as specified in the present invention on the upstream side which is closer to the forming machine 20 than by spraying water to the top paper at the position which is on the downstream side of the position on the upstream side (forming machine side) whose distance from the forming machine is 1/4 of the distance between the forming machine disposing position and the rough cutting machine disposing position, the present inventors consider as follows. First, the "occurrence of wrinkling" can be suppressed more by spraying water to the top paper than in the conventional production methods in which water is not sprayed, and therefore enabling the above-described reduction of the difference in swelling between the bottom paper and the top paper in the lining paper for gypsum board by spraying water is considered as one of the factors for the reason. On top of that, the following can be inferred as the main reason that a more remarkable effect is obtained by finding out that the effect of suppressing the "occurrence of wrinkling" varies significantly depending on the position where water is sprayed and devising a configuration such that water is sprayed at the position specified in the present invention. That is, the major reason is considered as follows: to prevent the occurrence of the difference in swelling between the bottom paper and the top paper in the lining paper for gypsum board more effectively, water needs to be sprayed onto the top paper before the gypsum slurry is set, and when water is sprayed only after the gypsum slurry begins to be set, the top paper cannot be effectively swollen.

As described above, when water is sprayed at the position specified in the present invention, i.e., at a position: which is between the forming machine 20 disposing position and the rough cutting machine 30 disposing position; which is on the upstream side (forming machine side) in therebetween; and whose distance from the forming machine disposing position is 1/4 of the distance therebetween, or at a position which is closer to the forming machine 20 than, i.e., a position which is on the upstream side of, the position whose distance from the forming machine is 1/4 of the distance between the forming machine disposing position and the rough cutting machine disposing position, the effect of the present invention can be obtained. According to studies conducted by the present inventors, when water is sprayed at a position: which is between the forming machine 20 disposing position and the rough cutting machine 30 disposing position; which is on the upstream side (forming machine side) in therebetween; and whose distance from the forming machine disposing position is, for example, 1/8 or 1/16 of the distance therebetween, which is a position closer to the forming machine 20, thereby a gypsum board product in which the "occurrence of wrinkling" is suppressed more can be obtained. In addition, regarding the amount of water to be sprayed, it has been ascertained that the effect can be obtained as long as the amount is within a range of 2.0 to 200 g/m². The amount of water to be sprayed is preferably as small as possible in view of drying thereafter. According to studies conducted by the present inventors, by spraying water in an amount of, for example, about 10 to about 100 g/m², a stable effect of suppressing the "occurrence of wrinkling" can be obtained.

The amount of water to be sprayed can be adjusted extremely easily by the following method. Specifically, the amount of water to be sprayed in a production apparatus of the present invention can be easily adjusted by using a conventionally known spray apparatus and adjusting the degree of opening of the regulator of the spray.

What is especially important in the present invention is to supply of moisture to the top paper at a particular position specified in the present invention for the purpose of reducing the difference in the swelling state between the top paper and bottom paper of lining paper for gypsum board, and regarding the amount of water to be sprayed, spraying water with a known spray apparatus is enough, so that an excellent effect can be obtained by simple operation. Specifically, in the present invention, the configuration is made such that water is sprayed at a particular position specified in the present invention, thereby reducing the difference in swelling between the top paper and the bottom paper, which gives an influence on the "occurrence of wrinkling," is realized, and as a result, the excellent effect of the present invention is obtained.

From the above-described reason, the sizes of the water droplets from the spray apparatus in spraying water are not particularly limited, too. Water is desirably supplied uniformly to the top paper of lining paper for gypsum board, and therefore as the spray apparatus which is used in the production method of the present invention, one that gives water particle sizes of, for example, about 5 to about 300 µm when water is sprayed can be used suitably. Note that the sizes of water droplets from known spray apparatuses are within this range.

According to studies conducted by the present inventors, the "occurrence of wrinkling" on the lining paper for gypsum board, which is a cause of a defective product tends to be frequent when the speed of the conveying-and-forming belt is increased in the method for producing a gypsum board, in which a gypsum board product is continuously obtained, as described above. In contrast, according to the method for producing a gypsum board of the present invention, it has been ascertained that the "occurrence of wrinkling" on the lining paper for gypsum board can be reduced and suppressed surely even when the productivity is increased by increasing the speed of the conveying-and-forming belt in operation to, for example, 90 m/minute or 120 m/minute, not to mention when the speed of the conveying-and-forming belt in operation is 60 m/minute, which is an operating condition of usual production lines.

Regarding suppression of the "occurrence of wrinkling" on the lining paper of an obtained gypsum board product, which is an object of the present invention and is a cause of a defective product in the method for producing a gypsum board, in which a gypsum board product is continuously obtained, spraying water at a particular position, which is described above, is effective. The present inventors have conducted further studies to find that the effect can also be obtained by the following method other than the above-described method. As described above, lightweight paper having a basis weight within a range of about 80 to about 200 g/m² has been developed of lining paper for gypsum board, and reducing the weights of gypsum board products is expected, but there is a problem that application of lightweight paper to actual continuous gypsum board production processes is extremely difficult. The main cause is in that particularly when lightweight paper is used of lining paper for gypsum board, a wrinkling defect on the lining paper of the gypsum board product is more and more likely to occur, so that the number of defective products due to the "occurrence of wrinkling" on the lining paper increases.

Facing the above-described problem, the present inventors have conducted diligent studies to ascertain that when water is supplied by spraying water onto the top paper of lining paper for gypsum board at a position within the range specified in the present invention in a continuous gypsum board producing process, thereby the "occurrence of wrinkling" can be suppressed even in the case where lightweight paper is used as lining paper for gypsum board. Based on such knowledge, the present inventors have conducted further studies for the purpose of stably obtaining a higher effect of suppressing the "occurrence of wrinkling" when lightweight paper is applied as lining paper for gypsum board. As a result, the present inventors have found that when a gypsum board is produced using lightweight paper as lining paper for gypsum board, it is effective to configure the lining paper for gypsum board as follows in addition to spray water onto the top paper of lining paper for gypsum board as described above, in order to obtain a stable effect. Specifically, the present inventors have found that when lightweight paper having a basis weight within a range of 80 to 200 g/m² is used as the top paper and bottom paper of lining paper for gypsum board, the following configuration of lining paper for gypsum board is a preferred configuration: that is, the preferred configuration is such that as the top paper of lining paper for gypsum board, which is to be the back side of a gypsum board product, lining paper having a basis weight smaller by about 5 g/m² to about 60 g/m² than the basis weight of the bottom paper of lining paper for gypsum board, which is to be the front side of a gypsum board, is used. In addition, according to studies conducted by the present inventors, it has been ascertained that when the above-described difference in basis weight is set to, for example, 10 g/m² or more as the combination of the top paper and the bottom paper, thereby a stabler effect of suppressing the "occurrence of wrinkling" on the lining paper is obtained. In an actual continuous gypsum board production process, lightweight paper having a basis weight of, for example, 100 g/m² to 180 g/m² is preferably used. Details on the combination of the top paper and bottom paper with the difference in basis weight will be described later.

As described above, the method for producing a gypsum board of the present invention is the same as an actual continuous gypsum board production process except that water is sprayed at the position specified in the present invention onto the top paper of lining paper for gypsum board. Here, the top paper of lining paper for gypsum board forms the board-like laminate obtained by laminating the top paper of lining paper for gypsum board on the gypsum slurry poured onto the bottom paper of lining paper for gypsum board. In addition, a preferred embodiment of the present invention is the same as an actual continuous gypsum board production process except that, in addition to the above-described configuration, the lightweight paper specified in the present invention is used as the top paper and bottom paper of lining paper for gypsum board. Therefore, as the gypsum slurry which is used in the method for producing a gypsum board of the present invention, any of the conventionally known gypsum slurries for gypsum board can be used. Hereinafter, calcined gypsum, which is a constituent material of the gypsum slurry, and other components will be described briefly.

### <Calcined Gypsum>

The main component of the gypsum slurry which is used in the method for producing a gypsum board of the present invention is calcined gypsum. Calcined gypsum is called hemihydrate gypsum and includes α type hemihydrate gypsum and β type hemihydrate gypsum depending on the calcination process. The α type hemihydrate gypsum is produced by a wet process and is obtained by calcining dihydrate gypsum in water (including steam). The β type hemihydrate gypsum is produced by a dry process and is obtained by calcining dihydrate gypsum in the air. As the calcined gypsum which is a constituent of the gypsum slurry which is used in the production method of the present invention, any of the α type hemihydrate gypsum and the β type hemihydrate gypsum can be used, the α type hemihydrate gypsum and the β type hemihydrate gypsum may be appropriately blended in the gypsum slurry. Note that the α type hemihydrate gypsum has advantages that, for example, the amount of water necessary for setting is smaller than that for the β type hemihydrate gypsum and the strength when it is set is higher than that for the β type hemihydrate gypsum.

### <Other Additives>

If necessary, the gypsum slurry which is used in the production method of the present invention may contain conventionally known other additive, such as a setting time modifier, a pH modifier, and a defoamer in addition to calcined gypsum. For example, as a setting retarder, a citrate such as sodium citrate, a succinate, an acetate, a malate, a borate salt such as borax, sucrose, a hexametaphosphate, an ethylenediaminetetraacetate, a diethylenetriaminepentaacetic acid, starch and protein degradation products, and the like can be used. As the defoamer, general-purpose defoamers, such as, for example, polyether-based, silicone-based, alcohol-based, mineral oil-based, vegetable oil-based, and nonionic surfactants, can be used appropriately.

### Examples

Hereinafter, the present invention will be described specifically with reference to Examples and Comparative Examples, but the present invention is not limited to these Examples. Note that "%" in Examples and Comparative Examples is on a mass basis unless otherwise noted.

### <Examples and Comparative Examples>

Hereinafter, the method for producing a gypsum board of the present invention will be described giving Examples and Comparative Examples. The present inventors produced gypsum boards with a gypsum board production line of an actual machined in operation as a usual machine for producing gypsum boards, wherein the production facilities were the same, the raw materials were the same, and the sizes were the same, 12.5 mm in thickness and 910 mm × 1820 mm, but the production conditions were changed, and thereby the present inventors conducted studies on influences on the "occurrence of wrinkling" in the gypsum board products caused by changing the production conditions. Specifically, the present inventors conducted studies on how the changes in the production speed, whether water is sprayed (applied) or not, and the differences in the spraying position, the differences in the basis weight of the lining paper for gypsum board, and the like in the gypsum board production line gave influences on the "occurrence of wrinkling" in the obtained gypsum board products. The gypsum board products obtained with the gypsum board production line were sampled and evaluated according to the following evaluation criteria.

### <Evaluation Method>

First, the evaluation method performed to check the effect obtained by the method for producing a gypsum board of the present invention will be described. Specifically, by the evaluation method described below, evaluations were performed on a "wrinkle" that occurred on the bottom paper of lining paper for gypsum board, which formed the surface of each of the gypsum boards obtained by the method for producing a gypsum board in which production conditions were changed variously.

### (Method for Evaluating Wrinkling)

A representative sample was taken from 12.5 mm thick, 910 mm × 1820 mm size gypsum boards obtained through continuous production using a usual gypsum board production line, and the representative sample was cut in half into a sample with the size of 910 mm × 910 mm, which was used as a sample for evaluating the occurrence of wrinkling.

As the method for evaluating wrinkling, the method using a surface state evaluation device described in Japanese Patent Laid-Open No. 59-178306 was employed. In this method, the extent of wrinkling is relatively evaluated using a principle such that an ultrasonic wave is applied to a specimen to receive a reflected wave thereof, and when wrinkling occurs a lot, the quantity of the reflected wave is small because the reflected wave diffuses, and when wrinkling occurs a little, the quantity of the reflected wave is large because the reflected wave does not diffuse. Table 1 shows the criteria for determining the "degree of occurrence of wrinkling" based on the "difference in the numerical value of the signal level (relative value) of the reflected wave," which is divided on a scale of one to six, with the signal level (relative value) of the reflected wave of the sample in a mirror-like state used in the present invention set to 100. In addition to the difference in the signal level divided on the scale of one to six, Table 1 also shows the criteria for discerning the degree of wrinkling by visual evaluation using oblique rays on a scale of one to six, which is the knowledge that the present inventors have empirically obtained.

The evaluation symbols in Table 1 show the evaluation criteria obtained by comprehensively taking into consideration the evaluation criteria using the numerical values according to the above-described "difference in the numerical value of the signal level (relative value) of the reflected wave," and the sensory evaluation criteria in the "visual evaluation using oblique rays." In the following test examples, the results of evaluating "wrinkling on the lining paper" which occurred on the produced gypsum boards are shown by these evaluation symbols as the "evaluation of wrinkling." As shown in Table 1, the gypsum boards rated as evaluation symbols 1 to 3 were defined as acceptable products without a problem in production.

**Table 1: Evaluation criteria employed for determination of occurrence of wrinkling**

| Reflected wave (relative value) | Evaluation symbol | Extent of occurrence of wrinkling by visual evaluation |
|---|---|---|
| 80 or more | 1 | Acceptable: like mirror surface, no problem at all |
| Less than 80 and 70 or more | 2 | Acceptable: wrinkle depth is less than 0.05 mm, allowable |
| Less than 70 and 60 or more | 3 | Acceptable: wrinkle depth is less than 0.10 mm, allowable |
| Less than 60 and 50 or more | 4 | Not acceptable: wrinkle depth is 0.10 to less than 0.15 mm |
| Less than 50 and 40 or more | 5 | Not acceptable: wrinkle depth is 0.15 to less than 0.20 mm |
| Less than 40 | 6 | Not acceptable: wrinkle depth is 0.2 mm or more |

### [Comparative Examples 1 to 3]

Production tests were performed with a usual gypsum board production line changing the production conditions as follows in order to check the tendency of the "occurrence of wrinkling" on the lining paper of gypsum board products. Specifically, first the gypsum board products were produced with a usual gypsum board production line changing the conveying belt speed to two levels, 90 m/minute and 120 m/minute, to check an influence of the conveying belt speed on the "occurrence of wrinkling." In addition, as for the basis weight of the top paper (on the back side of the board) and the bottom paper (on the front side of the board) of the lining paper for gypsum board used for production, whether or not the difference in basis weight between the top paper and the bottom paper gave an influence on the "occurrence of wrinkling" was checked keeping the conveying belt speed to a constant speed of 90 m/minute as compared to when conventional lining paper in which the top paper and the bottom paper had the same basis weight was used. Specifically, gypsum board products produced using lining paper in which the basis weight is the same between the top paper and the bottom paper, front/back = 150/150 (g/m²), and gypsum board products produced using lining paper in which the basis weight of the top paper (on the back side of the board) is smaller than the basis weight of the bottom paper (on the front side of the board), front/back = 150/140 (g/m²), were compared to check whether or not the difference in basis weight of the lining paper gave an influence on the "occurrence of wrinkling" on the lining paper for gypsum board. Table 2 shows the obtained results.

**Table 2: Influence of conveying belt speed and basis weight of front/back of lining paper on occurrence of wrinkling**

| | Basis weight (g/m²) of front/back of lining paper (difference between front and back) | Conveying belt speed (m/min) | Water spraying position and amount | | Evaluation of wrinkling |
|---|---|---|---|---|---|
| | | | Position* | Amount (g/m²) | |
| Comparative Example 1 | 150/150 (0) | 90 | Not sprayed | 0 | 5 |
| Comparative Example 2 | 150/140 (10) | 90 | Not sprayed | 0 | 4 |
| Comparative Example 3 | 150/140 (10) | 120 | Not sprayed | 0 | 6 |

As can be seen from the results of Comparative Example 1 and Comparative Example 2, which are shown in Table 2, it was found that the basis weight of the lining paper gives an influence on the "occurrence of wrinkling" on the lining paper of the produced gypsum boards and that the use of the lining paper in which the basis weight of the top paper (on the back side of the board) of the lining paper for gypsum board is smaller than the basis weight of the bottom paper (on the front side of the board) of the lining paper for gypsum board makes it possible to suppress the "occurrence of wrinkling" on the lining paper of the produced gypsum boards.

In addition, as shown in the results of Comparative Examples 2 and 3, which are shown in Table 2, it was ascertained that the conveying belt speed gives an influence on the "occurrence of wrinkling" on the lining paper of the produced gypsum boards and that an increase in the speed makes the "occurrence of wrinkling" remarkable. This means that to suppress the "occurrence of wrinkling" on the produced gypsum boards, the conveying belt speed needs to be decreased, which is an important issue that significantly influences the production efficiency. The present invention intends to develop a simple and efficient method that makes it possible to suppress the "occurrence of wrinkling" on the produced gypsum boards without decreasing the conveying belt speed.

### [Examples 1 to 3 and Comparative Example 2]

Whether the "occurrence of wrinkling" on the lining paper was able to be suppressed or not with a usual gypsum board production line by spraying water onto the top paper of lining paper for gypsum board was studied setting the conveying belt speed to 90 m/minute and the basis weight of the lining paper of the gypsum board products to front/back = 150/140 (g/m²), that is, the basis weight of the top paper (on the back side of the board) was made smaller than the basis weight of the bottom paper (on the front side of the board), which was the same as in Comparative Examples 1 to 3. The spraying of water onto the top paper of lining paper for gypsum board was performed at a position: which was between the forming machine disposing position and the rough cutting machine disposing position (written as "Position*" in the tables); which was on the upstream side (forming machine side) in therebetween; and whose distance from the forming machine disposing position was 1/4 of the distance therebetween, in other words, the position on the side closer to the forming machine. Table 3 shows the production conditions and the results of evaluation of the "occurrence of wrinkling" for the gypsum boards obtained by the production. For comparison, Table 3 also shows the production conditions and the result of evaluation of the "occurrence of wrinkling" for Comparative Example 2, in which gypsum boards were produced under the same production conditions as in Examples 1 to 3 except that water was not sprayed. Note that water was sprayed using a water spraying machine 5 (spray apparatus (trade name: ST-5, manufactured by FUSO SEIKI Co., Ltd.)) for all the tests in the present invention.

**Table 3: Relationship between occurrence of wrinkling and presence or absence of spray of water/water spraying amount**

| | Basis weight (g/m²) of front/back of lining paper (difference between front and back) | Conveying belt speed (m/min) | Water spraying position and amount | | Evaluation of wrinkling |
|---|---|---|---|---|---|
| | | | Position* | Amount (g/m²) | |
| Comparative Example 2 | 150/140 (10) | 90 | Not sprayed | 0 | 4 |
| Example 1 | 150/140 (10) | 90 | 1/4 | 2 | 2 |
| Example 2 | 150/140 (10) | 90 | 1/4 | 100 | 1 |
| Example 3 | 150/140 (10) | 90 | 1/4 | 200 | 1 |

As shown in Table 3, it was found that the "occurrence of wrinkling" on the lining paper of the produced gypsum boards can be clearly suppressed by spraying water onto the lining paper. In addition, it was able to be ascertained that even when the amount of water sprayed is small, as small as about 2 g/m², the "occurrence of wrinkling" on the lining paper for gypsum board can be suppressed.

### [Examples 4 to 7 and Comparative Examples 3 to 5]

Production tests with a usual gypsum board production line to conduct the following study were performed increasing the conveying belt speed to 120 m/minute and setting the basis weight of the lining paper of the gypsum board products to front/back = 150/140 (g/m²), that is, the basis weight of the top paper (on the back side of the board) was made smaller than the basis weight of the bottom paper (on the front side of the board), which was the same as in above examples. Specifically, the production tests were for checking whether the "occurrence of wrinkling" on the lining paper for gypsum board can be suppressed by spraying water onto the top paper of lining paper for gypsum board during production even when the speed was increased. Furthermore, a study was made on influences on the suppression of the "occurrence of wrinkling" on the lining paper for gypsum board by the difference in the position of spraying water onto the top paper of lining paper for gypsum board or the difference in the amount of water sprayed.

Table 4 shows the production conditions and the results of evaluation of the "occurrence of wrinkling" together for the gypsum boards obtained by the production. As described in Table 4, in Examples 4 to 7, water was sprayed onto the top paper of lining paper for gypsum board at a position: which was between the forming machine disposing position and the rough cutting machine disposing position; which was on the upstream side (forming machine side) in therebetween; and whose distance from the forming machine disposing position was 1/4 of the distance therebetween, or water was sprayed onto the top paper of lining paper for gypsum board at a position on the side closer to the forming machine than, i.e., a position on the upstream side of, the position whose distance from the forming machine was 1/4 of the distance between the forming machine disposing position and the rough cutting machine disposing position. Specifically, in Examples 4, 6, and 7, water was sprayed at the position whose distance from the forming machine was 1/4 of the distance between the forming machine and the rough cutting machine, and in Example 5, water was sprayed at a position whose distance from the forming machine is 1/16 of the distance between the forming machine and the rough cutting machine, in other words water was sprayed at a position on the upstream side of the position whose distance from the forming machine was 1/4 of the distance between the forming machine disposing position and the rough cutting machine disposing position. For comparison, Table 4 also shows the production conditions and the result of evaluation of the "occurrence of wrinkling" for Comparative Example 3 where the gypsum boards were produced under the same production conditions as in Examples 4 to 7 except that the water was not sprayed. In Comparative Examples 4 and 5, the water was sprayed at a position on the downstream side (far from the forming machine) of "the position: which is between the forming machine disposing position and the rough cutting machine disposing position; which is on the upstream side (forming machine side) in therebetween; and whose distance from the forming machine disposing position is 1/4 of the distance therebetween" specified in the present invention. Specifically, in Comparative Example 4, water was sprayed at a position whose distance from the forming machine disposing position was 3/4 of the distance between the forming machine disposing position and the rough cutting machine disposing position, and in Comparative Example 5, water was sprayed at a position whose distance from the forming machine disposing position was 2/4 (1/2) of the distance between the forming machine disposing position and the rough cutting machine disposing position.

**Table 4: Relationship between occurrence of wrinkling and water spraying position/amount**

| | Basis weight (g/m²) of front/back of lining paper (difference between front and back) | Conveying belt speed (m/min) | Water spraying position and amount | | Evaluation of wrinkling |
|---|---|---|---|---|---|
| | | | Position* | Amount (g/m²) | |
| Comparative Example 3 | 150/140 (10) | 120 | Not sprayed | 0 | 6 |
| Comparative Example 4 | 150/140 (10) | 120 | 3/4 | 100 | 6 |
| Comparative Example 5 | 150/140 (10) | 120 | 2/4 | 100 | 4 |
| Example 4 | 150/140 (10) | 120 | 1/4 | 100 | 2 |
| Example 5 | 150/140 (10) | 120 | 1/16 | 100 | 1 |
| Example 6 | 150/140 (10) | 120 | 1/4 | 2 | 2 |
| Example 7 | 150/140 (10) | 120 | 1/4 | 200 | 1 |

As shown in Table 4, it was ascertained from the results of Comparative Examples 3 to 5 that even when the conveying belt speed was high, as high as 120 m/minute, the "occurrence of wrinkling" on the lining paper for gypsum board can be suppressed by spraying water onto the top paper of lining paper for gypsum board. However, as can be clearly seen from the comparison between Examples 4 and 5 and Comparative Examples 4 and 5, it was found that the extent of the effect was different depending on the position where water was sprayed onto the top paper of lining paper for gypsum board. As shown in Table 4, it was ascertained that a remarkable effect can be obtained at "the position: which is between the forming machine disposing position and the rough cutting machine disposing position; which is on the upstream side (forming machine side) in therebetween; and whose distance from the forming machine disposing position is 1/4 of the distance therebetween, or on the upstream side of the position whose distance from the forming machine is 1/4 of the distance between the forming machine disposing position and the rough cutting machine disposing position" specified in the present invention. On the other hand, it was ascertained that when water was sprayed as in Comparative Examples 4 and 5 at the positions on the downstream side of the position: which was between the forming machine disposing position and the rough cutting machine disposing position; which was on the upstream side (forming machine side) in therebetween; and whose distance from the forming machine disposing position was 1/4 of the distance therebetween, specified in the present invention, the effect was deteriorated.

Furthermore, as can be understood from the comparison between Examples 4, 6, and 7, which is shown in Table 4, the present inventors found that by spraying water onto the lining paper under the conditions specified in the present invention, the "occurrence of wrinkling" on the lining paper for gypsum board was clearly suppressed for the produced gypsum boards even when the conveying belt speed was high, as high as 120 m/minute. In addition, it was ascertained from the comparison between Example 4 and Example 5 that a higher effect of suppressing the "occurrence of wrinkling" can be obtained by spraying water "on the upstream side of the position: which is between the forming machine disposing position and the rough cutting machine disposing position; which is on the upstream side (forming machine side) in therebetween; and whose distance from the forming machine disposing position is 1/4 of the distance therebetween," i.e. at a position closer to the forming machine. As for the amount of water sprayed, it was ascertained that even when the amount of water sprayed is small, as small as about 2 g/m², the effect of suppressing the "occurrence of wrinkling" on the lining paper for gypsum board can also be obtained, and this result was the same as in the case where the conveying belt speed was set to 90 m/minute, which was ascertained above.

### [Examples 8 to 14 and Example 4]

In Examples 9 to 14, production tests with a usual gypsum board production line were performed as follows: the conveying belt speed was set to be high, 120 m/minute; as the condition of spraying water, the position of spraying water was kept constant at the position: which was between the forming machine disposing position and the rough cutting machine disposing position; which was on the upstream side (forming machine side) in therebetween; and whose distance from the forming machine disposing position was 1/4 of the distance therebetween, as specified in the present invention; as for the lining paper of the gypsum board products, the "basis weight of front/back" and the "difference between front and back" were changed as shown in Table 5; and the amount of water sprayed was set as shown in Table 5. Note that in Example 8, gypsum boards were produced under the following conditions to evaluate the resulting gypsum board products: the basis weight of the lining paper of the gypsum board products was the same between the front and the back; and water was sprayed onto the top paper at a position: which was between the forming machine disposing position and the rough cutting machine disposing position; which was on the upstream side (forming machine side) in therebetween; and whose distance from the forming machine disposing position was 1/16 of the distance therebetween, i.e. water was sprayed onto the top paper on the upstream side of the position: which was between the forming machine disposing position and the rough cutting machine disposing position; which was on the upstream side (forming machine side) in therebetween; and whose distance from the forming machine disposing position was 1/4 of the distance therebetween, specified in the present invention. For the purpose of a relative comparison of production conditions, the production conditions and evaluation results for Example 4, shown earlier in Table 4, are also included in Table 5.

**Table 5: Relationship between occurrence of wrinkling and basis weight of front/back of lining paper/difference in basis weight**

| | Basis weight (g/m²) of front/back of lining paper (difference between front and back) | Conveying belt speed (m/min) | Water spraying position and amount | | Evaluation of wrinkling |
|---|---|---|---|---|---|
| | | | Position* | Amount (g/m²) | |
| Example 8 | 150/150 (0) | 120 | 1/16 | 100 | 2 |
| Example 9 | 150/145 (5) | 120 | 1/4 | 100 | 3 |
| Example 4 | 150/140 (10) | 120 | 1/4 | 100 | 2 |
| Example 10 | 150/130 (20) | 120 | 1/4 | 100 | 1 |
| Example 11 | 150/120 (30) | 120 | 1/4 | 50 | 1 |
| Example 12 | 130/120 (10) | 120 | 1/4 | 2 | 3 |
| Example 13 | 130/120 (10) | 120 | 1/4 | 100 | 2 |
| Example 14 | 130/120 (10) | 120 | 1/4 | 200 | 1 |

First, as shown in Table 5, it was able to be ascertained from the result of Example 8 that even when the conveying belt speed was high, as high as 120 m/minute, the "occurrence of wrinkling" can be suppressed by spraying water onto the top paper of lining paper for gypsum board at a particular position specified in the present invention without making any difference in the basis weight of the lining paper for gypsum board between the top paper (on the back side of the board) and the bottom paper (on the front side of the board).

As shown in Table 5, in Examples 9, 4, and 10, gypsum boards were produced under the same conditions except that the combination of the top paper (back) and bottom paper (front) of the lining paper for gypsum board was changed. Specifically, in Example 9, gypsum boards were produced using the lining paper in which the basis weight of the top paper was 5 g/m² smaller than the basis weight of the bottom paper; the basis weight of the top paper (back) was 145 g/m² and the basis weight of the bottom paper (front) was 150 g/m². In Example 4, gypsum boards were produced using the lining paper in which the basis weight of the top paper was 10 g/m² smaller than the basis weight of the bottom paper; the basis weight of the top paper (back) was 140 g/m² and the basis weight of the bottom paper (front) was 150 g/m². In Example 10, gypsum boards were produced using the lining paper in which the basis weight of the top paper was 20 g/m² smaller than the basis weight of the bottom paper; the basis weight of the top paper (back) was 130 g/m² and the basis weight of the bottom paper (front) was 150 g/m². It was ascertained from the results of evaluation of these gypsum boards, the "occurrence of wrinkling" tends to be suppressed more when the difference in basis weight is greater.

In addition, from the comparison between Example 10 and Example 11 where the evaluation result was the same, "1," as shown in Table 5, it was found that even when the amount of water sprayed was reduced, the same effect was obtained by increasing the difference in basis weight between the top paper and bottom paper of the lining paper. Reducing the amount of water sprayed means that a load to a drying process, caused by spraying water, can be reduced, which is useful in terms of production costs.

Furthermore, in Examples 12 to 14, gypsum boards were produced using the lining paper for gypsum board having a further reduced weight as shown in Table 5 to conduct a study on the applicability of the present invention. Specifically, as for the lining paper for gypsum board, the lining paper having a basis weight of 130 g/m² was used as the bottom paper (front), and the lining paper having a basis weight of 120 g/m² was used as the top paper (back), in other words, the combination such that the difference in basis weight was 10 g/m² was adopted. There is concern that the lightweight paper with the above-described basis weight used in Examples 12 to 14 is more likely to cause the "occurrence of wrinkling" than in Examples 8 to 11 and Example 4. However, as shown in Table 5, it was ascertained that even when gypsum boards were produced using the lining paper having further reduced basis weight as used in Examples 12 to 14, the "occurrence of wrinkling" on the lining paper for gypsum board can be suppressed by spraying water at a particular position specified in the present invention. Specifically, as shown in Table 5, it was ascertained that gypsum boards which were acceptable products in the evaluation of the "occurrence of wrinkling" on the lining paper for gypsum board can be produced within a range of 2 to 200 g/m² in terms of the amount of water sprayed. In addition, it was found that when the amount of water sprayed is increased to 100 g/m² or more, the "occurrence of wrinkling" on the lining paper for gypsum board can be suppressed more stably.

### Reference Signs List

- 1: Bottom paper of lining paper for gypsum board
- 2: Gypsum slurry
- 3: Top paper of lining paper for gypsum board
- 4: Board-like laminate
- 5: Water spraying machine (spray apparatus)
- 6: Mixer
- 10: Conveying-and-forming belt (conveying belt)
- 20: Forming machine
- 30: Rough cutting machine
- 40: Dryer
- 50: Finish-cutting machine

## Claims

1. A method for continuously producing a gypsum board, comprising a forming-and-conveying step of forming a board-like laminate in which a gypsum slurry being a raw material for a gypsum material layer of a gypsum board is laminated between top paper of lining paper for gypsum board and bottom paper of lining paper for gypsum board and conveying the board-like laminate while forming the board-like laminate, wherein
the forming-and-conveying step has a series of processes of continuously pouring the gypsum slurry onto the bottom paper of lining paper for gypsum board before being continuously fed into a forming machine, laminating the top paper of lining paper for gypsum board on the poured gypsum slurry with the forming machine to mold the board-like laminate, and conveying the molded board-like laminate to a rough cutting machine with a conveying-and-forming belt, and
water is sprayed or applied onto the top paper of lining paper for gypsum board at a position: which is between the forming machine disposing position and the rough cutting machine disposing position; which is on the upstream side (forming machine side) in therebetween; and whose distance from the forming machine disposing position is 1/4 of the distance therebetween, or at a position which is on the forming machine side that is the upstream side of the position whose distance from the forming machine is 1/4 of the distance between the forming machine disposing position and the rough cutting machine disposing position.

2. The method for producing a gypsum board according to claim 1, wherein each of the top paper of lining paper for gypsum board and the bottom paper of lining paper for gypsum board has a basis weight within a range of 80 to 200 g/m².

3. The method for producing a gypsum board according to claim 1 or 2, wherein the top paper of lining paper for gypsum board has a basis weight smaller than the bottom paper of lining paper for gypsum board by 5 g/m² to 60 g/m².

4. The method for producing a gypsum board according to claim 1 or 2, wherein the amount of water to be sprayed or to be applied is within a range of 2.0 to 200 g/m².

5. The method for producing a gypsum board according to claim 3, wherein the amount of water to be sprayed or to be applied is within a range of 2.0 to 200 g/m².

6. The method for producing a gypsum board according to claim 1 or 2, wherein the conveying speed of the conveying-and-forming belt is 60 m/minute or higher.

7. The method for producing a gypsum board according to claim 3, wherein the conveying speed of the conveying-and-forming belt is 60 m/minute or higher.

8. The method for producing a gypsum board according to claim 4, wherein the conveying speed of the conveying-and-forming belt is 60 m/minute or higher.
